# EUROPÄISCHE PATENTANMELDUNG

(11) **EP 2 604 379 A2**
(43) Veröffentlichungstag der Anmeldung: **19.06.2013**
(21) Anmeldenummer: 12190687.9
(22) Anmeldetag: 30.10.2012
(51) Int. Cl.: B23P 15/00

(54) **Verfahren zur Herstellung eines umgeformten metallischen Werkstücks mit Panzerung**

(30) Priorität: 15.12.2011 DE 102011056480
(71) Anmelder: Gesenkschmiede Schneider GmbH, 73431 Aalen (DE)
(72) Erfinder: Körner, Thomas, 58332 Schwelm (DE); Schmitz, Ernst-Peter, 73453 Abtsgmünd (DE); Kolbe, Peter, 73434 Aalen (DE)
(74) Vertreter: Neidl-Stippler, Cornelia

(57) **Zusammenfassung**

Die Erfindung betrifft ein Verfahren zur Herstellung eines umgeformten metallischen Werkstücks mit Panzerung anderer Eigenschaften als das Basiswerkstückmaterial, mit den Schritten: Vorlegen eines Panzerungsrohlings (1); Vorlegen eines Werkstückbasisrohlings (2); Anordnen des Panzerungsrohlings auf dem Werkstückbasisrohling; Verschweissen eines Oberflächenabschnitts des Werkstückbasisrohlings (2) mit dem Panzerungsrohling (1) unter Ausbildung eines Rohlings mit einem gepanzerten Oberflächenabschnitt (3); und Umformen des so hergestellten Rohlings mit einem gepanzerten Oberflächenabschnitt (3) unter Herstellung einer formnahen Werkstückkontur durch ein Verfahren ausgewählt aus der Gruppe bestehend aus: Schmieden, Stauchen, Elektrostauchen, Fliesspressen - alle genannten Verfahren im kalten oder halbwarmen oder warmen Temperaturbereich unter Herstellung eines formnahen umgeformten gepanzerten Werkstücks 4 sowie ein gepanzertes metallisches Werkstück.

## Beschreibung

Die Erfindung bezieht sich auf ein Verfahren zur Herstellung eines umgeformten metallischen Werkstücks mit Panzerung anderer Eigenschaften als das Basiswerkstückmaterial aus zusammengeschweißten Metallrohlingen und insbesondere Metall-Knetlegierungen. Weiter bezieht sich die Erfindung auch auf ein mit diesem Verfahren hergestelltes Werkstück, wie gepanzerte Kolben. Dabei wird ein Werkstoff mit besserer Widerstandsfähigkeit gegenüber den Umgebungsbedingungen als Schutzschicht oder Panzerung auf einen Basis-Werkstoff zumindest teilweise permanent aufgebracht.

Die vorliegende Erfindung bezieht sich insbesondere auf Stahlkolben, eignet sich aber auch für Zahnräder, Rollen, Flügelräder, Tellerventile, Kegelräder, Tellerräder; Flügelrädern, Kolben, Ventilteile, Pumpenstempel, Kolbenpumpenteile.

Insbesondere im Automobilbau wird zunehmend Wert auf lange Standzeiten von Komponenten und auf Leichtbau gelegt, um den Kraftstoffverbrauch zu minimieren und damit die CO2-Emissionen unter die immer strenger werdenden Grenzwerte abzusenken. Werkstücke aus Stahl erfüllen dabei die Anforderungen an hohe Festigkeit, sind aber nicht immer zunderfest. Leichtmetall und insbesondere aus Aluminiumlegierungen erfüllen in hohem Masse die notwendigen Gewichtskriterien, sind aber nicht so fest und reagieren relativ leicht mit den Bestandteilen von Dieselbrennstoffen. Weitere Anwendungsgebiete sind Teile, deren Beanspruchung im wesentlichen anderen Randbereichen stattfindet. Typisch sind dafür belastete Transportrollen mit Rollachsen, Zahnräder, Ventilteller, Flügelräder, Tellerräder, Kegelräder etc., die nur im Aussenbereich höheren Beanspruchungen standhalten müssen, als im Zentrum. Sei es aufgrund des Mediums, in dem diese arbeiten (bspw. Flügel von Mischmaschinen oder Förderern) oder aber aufgrund der mechanischen Beanspruchung, wie bei Zahnkränzen.

Es ist demnach eine Aufgabe der vorliegenden Erfindung, Nachteile des Standes der Technik zu vermeiden und ein Verfahren zur Herstellung von gepanzerten Werkstücken aus Metalllegierungen zu entwickeln, das einerseits hervorragende mechanische Eigenschaften sicherstellt und energiesparender, umweltfreundlicher und damit kostengünstiger ist als bekannte Technologien. Ebenfalls Aufgabe der Erfindung ist es, ein Werkstück zu entwickeln, das die zur Erzielung der extremen Belastungsanforderungen im gepanzerten Bereich benötigten mechanischen Eigenschaften aufweist.

Diese Aufgabe wird erfindungsgemäss durch einen Verfahren mit den Merkmalen des Anspruchs 1 bzw. ein danach hergestelltes Werkstück gelöst. Fortentwicklungen ergeben sich aus den abhängigen Ansprüchen.

Das erfindungsgemässe Verfahren zur Herstellung von umgeformten metallischen Werkstücken, wie Schmiedeteilen mit einer angeschweissten und angeschmiedeten Panzerung anderer Eigenschaften als das Basis-Werkstück-Metallteil, weist auf: Vorlegen eines Panzerungsrohlings; Vorlegen eines Werkstückbasisrohlings; Anordnen des Panzerungsrohlings auf dem Werkstückbasisrohling; Verschweissen eines Oberflächenabschnitts des Werkstückrohlings mit dem Panzerungsrohling unter Ausbildung eines Rohlings mit einem gepanzerten Oberflächenabschnitt; und Umformen des so hergestellten gepanzerten Rohlings unter Herstellung einer Endform-Aussenteilkontur durch ein Verfahren ausgewählt aus der Gruppe bestehend aus: Schmieden, Stauchen, Elektrostauchen, Fliesspressen - alle genannten Verfahren im kalten oder halbwarmen oder warmen Temperaturbereich unter Herstellung eines formnahen umgeformten gepanzerten Werkstückbasiss.

Es kann notwendig sein, dass die Panzerung ein mechanisch belastbareres Metall als der Werkstückbasisrohling aufweist. Dies ist insbesondere bei mechanisch belasteteten Oberflächen, wie von Ventilen, Getrieberädern u. dgl. der Fall.

Es kann aber auch erwünscht sein, dass die Panzerung ein chemisch widerstandsfähigeres Metall als der Werkstückbasisrohling aufweist - bspw. bei Verbrennungsmotorkolbeninnenraumverkleidungen, bei denen die bei der Verbrennung auftretenden Verbindungen bspw. Stahl angreifen.

Das Schweissverfahren zum Aufbringen der Panzerung ist bevorzugt ausgewählt aus der Gruppe bestehend aus Reibschweissen, Induktionsschweissen, WIG-; MAG-; Elektronenstrahl-, Laser-; Schweissverfahren.

Typische, nach dem erfindungsgemässen Verfahren herstellbare gepanzerte Werkstücke können bspw. Zahnräder, Rollen, Flügelrädern, Tellerventilen, Kegelrädern, Tellerrädern; Flügelrädern, Kolben, Ventilteilen, Pumpenstempel sein. Typischerweise ist das gepanzerte Werkstückbasis ein gepanzerter Stahlkolben für einen Verbrennungsmotor, um Verzunderung des Materials zu vermeiden. Dafür kann die Panzerung ausgewählt sein bspw. aus Stellit, hochbelastbarem Stahl, hochlegiertem Stahl. Eine andere Anwendung ist als Kolbenpumenteil.

Das gemeinsame Umformen von Werkstückbasis und Panzerung kann bspw. durch Schmieden, Stauchen, Fließpressen kalt, halbwarm, oder warm erfolgen.

Durch das erfindungsgemässe Verfahren können Werkstücke aus Legierungen hergestellt werden, welche die mechanischen Eigenschaften eines klassischen Schmiedeteils, wie eines Kolbens, eines Ventils oder Nockens besitzen, aber (chemische) Oberflächeneigenschaften anderer Materialien haben. Das erfindungsgemässe Verfahren umfasst somit die geringstmögliche Zahl an Prozessstufen inklusive Erwärmungsprozesse, um zu einem Werkstoff im wesentlichen aus einer Grundmetallegierung mit den hohen mechanischen Kennwerten zu gelangen, der aber beispielsweise die für moderne hochbelastete Brennräume von Kolben notwendige Resistenz gegenüber den Verbrennungsgasen von Treibstoffen besitzt.. Dadurch können bedeutende Energie-, Prozess- und Materialkosten gespart werden, bei gleichzeitiger Standzeitverlängerung, was neben dem Kostenvorteil auch eine erhebliche geringere Umweltbelastung darstellt.

Gemäss einer Ausführungsform kann das Werkstück vor dem Schmieden bzw. Umformen auf eine bestimmte Temperatur im Bereich von 450-580 °C erwärmt werden. Durch das Zwischenerwärmen wird es möglich, ein Temperaturfenster von +/- 5°C einzuhalten, was eine höhere Prozesssicherheit gewährleistet.

Bei Einsatz der Erfindung auf Aluminiumteile ist die Aluminiumlegierung eine Aluminiumknetlegierung, insbesondere eine AlMgSi oder AlMgSiCu-Legierung. Mit dieser Knetlegierung können durch das erfindungsgemässe Verfahren Werkstücke mit besonders guten mechanischen Eigenschaften, insbesondere hoher Festigkeit und Dehnbarkeit, erzielt werden. Es ist zudem vorteilhaft, wenn die Entformung bei Umformtemperatur erfolgt. So kann auf eine zusätzliche Zwischenerwärmung verzichtet werden. So kann das erfindungsgemässe Werkstück im wesentlichen aus einer AlMgSi oder AlMgSiCu-Legierung bestehen und wird mit dem beschriebenen erfindungsgemäs-sen Verfahren mit einer Panzerung versehen werden. Es können aber auch Titanknetlegierungen und ähnliche Leichtmetalllegierungen verwendet werden, wodurch sich das Werkstück besonders gut für hochbelastete Leichtbau- und Kraftfahrzeugkomponenten eignet, jedoch im Vergleich zu herkömmlichen Schmiedeteilen erhebliche Kostensenkungen und Gewichtsersparnis ermöglicht. Es ist bekannt, Metallteile durch Reibschweißen miteinander zu verbinden. Insbesondere ist es bspw. von der DE 32 05 183 A1 bekannt, bei einem Tellerventil den hochbelasteten Ventilboden durch Reibschweissen einen Hochtemperatur- werkstoff ganzflächig aufzubringen.

Es kann für bestimmte Anforderungen die Qualität eines gebauten Metallbauteils verbessert und gleichzeitig ein von den Materialkosten her sehr wirtschaftliches Metallbauteil hergestellt werden. Dabei ist dann, wenn der Werkstoff des Basiswerkstücks und der Panzerung in der Legierung verschieden sind, bspw. das Panzerungsmetallteil eine feste bzw. hoch feste Legierung, wie Hochtemperaturstahl (Definition für hochfeste Legierung: s. "Stahlschlüssel" 2007, Verlag Stahlschlüssel Wegst 2007); eine Titanlegierung; eine Aluminiumlegierung, eine Edelstahllegierung oder sonstiges Metall sein und für das Basiswerkstück ein minder-wertigeres/weicheres/chemisch weniger widerstandsfähiges oder preiswerteres Metall - bspw. auch mit selbstschmierenden Eigenschaften eingesetzt werden. Es versteht sich, daß die Werkstücklegierungen nicht nur Stahl oder Aluminiumlegierungen, sondern auch Titan- oder Magnesiumlegierungen/Calciumlegierungen und Kombinationen derselben umfassen. Es versteht sich, daß die vorstehend genannten und nachstehend noch zu erläuternden Merkmale nicht nur in der jeweils angegebenen Kombination, sondern auch in anderen Kombinationen von Ausgangsteilen verwendbar sind.

Die Erfindung wird nachfolgend beispielhaft anhand eines Kolbens für einen Verbrennungsmotor mit Panzerung im Innenraum unter Bezugnahme auf die anliegende Zeichnung näher erläutert, auf die sie keineswegs eingeschränkt ist. Es zeigt:
Fig. 1 den Beginn des Schweissverfahrens, wobei die beiden zu verbindenden Ausgangsteile vor dem Verbindungsvorgang miteinander ausgerichtet sind; und einen verschweissten Rohling mit einem gepanzerten Oberflächenabschnitt, und
Fig. 2 ein mit einem ersten Schmiedehub zu einem endformnahen Kolbenteil umgeformtes gepanzertes endformnahes Werkstückbasis.

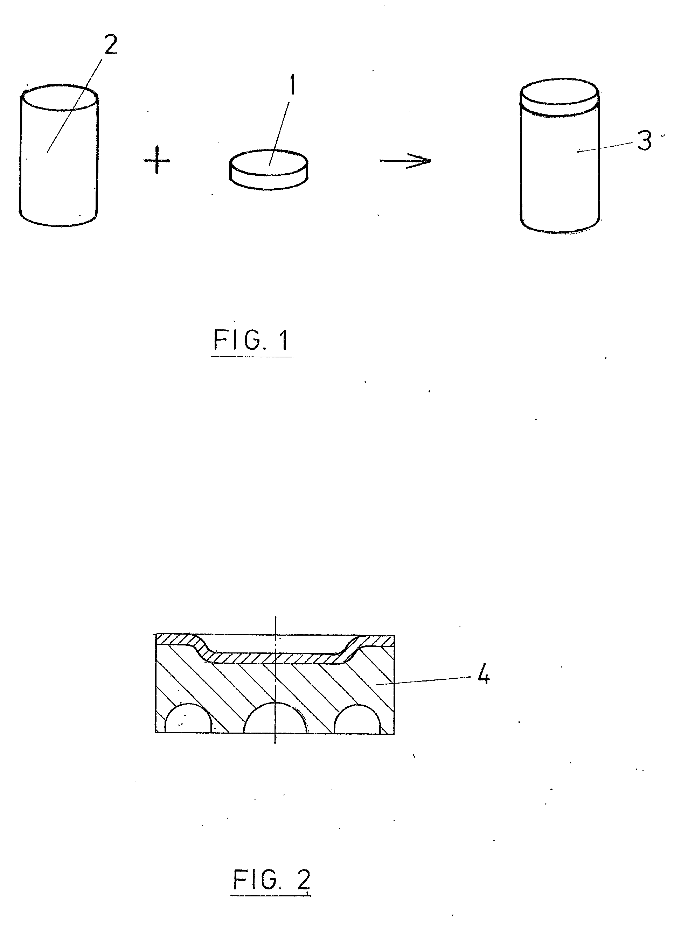

Fig. 1 - 2 zeigen die Herstellung eines gepanzerten geschmiedeten Kolbenteils nach dem erfindungsgemässen Verfahren. Fig. 1 zeigt die beiden Ausgangsteile - den Panzerungsrohling 1 - hier einen Stahlknüppel - und den Werkstückbasisrohling 2, der hier den gleichen Außendurchmesser wie der Werkstückbasisrohling 2 besitzt. Beide Rohlinge 1, 2 werden nun zueinander ausgerichtet, wobei hier die Längsachsen der Rohlinge miteinander fluchten, und miteinander unter Ausbildung einer Schweissfläche miteinander verschweisst. Nun wird die so verschweißte Metallanordnung durch Schmieden des geschweissten, das Materialteil und der Panzerung aufweisenden Halbzeugs umgeformt, wodurch dann eine endgültige, auch formschlüssige Verbindung zwischen beiden Rohlingen im umgeformten gepanzerten Schmiedeteil erzielt wird.

Auf diese Art und Weise wird eine gesicherte Verbindung zwischen Panzerung und Werkstückbasis hergestellt. Ein typischer Knüppel für das Kolbenteil ist aus einer Eisenlegierung. Ein geeignetes Material ist bspw. Schmiede - Werkzeugstahl, wie die Warmarbeitsstähle 1.2367, 1.2714, 1.2344, ein typisches Material für die Panzerung kann ein hochlegierter Stahl, wie Nimonic oder eine sonstige Edelstahllegierung, es kann ein X-Stahl, aber auch Stellit oder andere mit dem Werkstückbasis schweissfähige Legierung, sowie andere, dem Fachmann geläufige und offensichtliche Materialien sein.

Während die Erfindung anhand bevorzugter Ausführungsformen beschrieben wurde, sind für den Fachmann, an den sich die Erfindung wendet, verschiedenste alternative Entwürfe und Ausführungsformen zur Durchführung der Erfindung ersichtlich, wie in den beigefügten Ansprüchen definiert.

## Patentansprüche

1. Verfahren zur Herstellung eines umgeformten metallischen Werkstücks mit Panzerung anderer Eigenschaften als das Basiswerkstückmaterial, mit den Schritten:
Vorlegen eines Panzerungsrohlings (1);
Vorlegen eines Werkstückbasisrohlings (2);
Anordnen des Panzerungsrohlings auf dem Werkstückbasisrohling;
Verschweissen eines Oberflächenabschnitts des Werkstückbasisrohlings (2) mit dem Panzerungsrohling (1) unter Ausbildung eines Rohlings mit einem gepanzerten Oberflächenabschnitt (3); und
Umformen des so hergestellten Rohlings mit einem gepanzerten Oberflächenabschnitt (3) unter Herstellung einer formnahen Werkstückkontur durch ein Verfahren ausgewählt aus der Gruppe bestehend aus: Schmieden, Stauchen, Elektrostauchen, Fliesspressen - alle genannten Verfahren im kalten oder halbwarmen oder warmen Temperaturbereich unter Herstellung eines formnahen umgeformten gepanzerten Werkstücks (4).

2. Verfahren nach Anspruch 1, **dadurch gekennzeichnet, dass** die Panzerung ein mechanisch belastbareres Metall als der Werkstückbasisrohling (2) aufweist

3. Verfahren nach Anspruch 1, **dadurch gekennzeichnet, dass** die Panzerung ein chemisch widerstandsfähigeres Metall als der Werkstückbasisrohling (2) aufweist.

4. Verfahren nach einem der vorangehenden Ansprüche, **dadurch gekennzeichnet, dass** das Schweissverfahren ausgewählt ist aus der Gruppe bestehend aus Reibschweissen, Induktionsschweissen, WIG-; MAG-; Elektronenstrahl-; Laser-; Schweissverfahren

5. Gepanzertes metallisches Werkstück, hergestellt nach einem Verfahren nach einem der vorangehenden Ansprüche, **dadurch gekennzeichnet, dass** es ausgewählt ist aus Zahnrädern, Rollen, Flügelrädern, Tellerventilen, Kegelrädern, Tellerrädern; Flügelrädern, Kolben, Ventilteilen, Pumpenstempel.

6. Gepanzertes metallisches Werkstück nach Anspruch 5, **dadurch gekennzeichnet, dass** es ein gepanzerter Stahlkolben für einen Verbrennungsmotor ist.

7. Gepanzertes metallisches Werkstück, **dadurch gekennzeichnet, dass** es ein gepanzertes Teil für eine Kolbenpumpe ist.

8. Gepanzertes metallisches Werkstück nach einem der Ansprüche 5 bis 7, **dadurch gekennzeichnet, dass** die Panzerung ausgewählt ist aus Stellit, hochbelastbarem Stahl, hochlegiertem Stahl.

9. Gepanzertes metallisches Werkstück nach einem der Ansprüche 5 - 8, **dadurch gekennzeichnet, dass** es durch Schmieden, Stauchen, Fließpressen umgeformt ist.

10. Gepanzertes metallisches Werkstück nach einem der Ansprüche 5 - 9, **dadurch gekennzeichnet, dass** es warm, halbwarm, oder warm umgeformt ist.
